# EUROPÄISCHE PATENTSCHRIFT

(11) **EP 1 561 610 B1**
(45) Veröffentlichungstag und Bekanntmachung des Hinweises auf die Patenterteilung: **23.06.2010**
(21) Anmeldenummer: 05002471.0
(22) Anmeldetag: 05.02.2005
(51) Int. Cl.: B60D 1/54

(54) **Anhängerkupplung für Kraftfahrzeuge**
Trailer hitch mechanism
Mecanisme d'attelage

(30) Priorität: 09.02.2004 DE 102004006371
(43) Veröffentlichungstag der Anmeldung: 10.08.2005
(73) Patentinhaber: WESTFALIA - Automotive GmbH, 33378 Rheda-Wiedenbrück (DE)
(72) Erfinder: Aufderheide, Reinhold, 33397 Rietberg (DE); Domke, Friedrich, 33442 Herzebrock-Clarholz (DE); Hermbusch, Gerhard, 33449 Langenberg (DE); Peitz, Jürgen, 33379 Rheda-Wiedenbrück (DE); Vahle, Dirk, 59320 Ennigerloh (DE); Wyrwich, Martin, 33378 Rheda-Wiedenbrück (DE)
(74) Vertreter: Grosse, Dietrich

(56) Entgegenhaltungen:
- EP-A- 1 153 770
- DE-U1-202004 006 666
- US-A1- 2004 075 244

## Beschreibung

Die Erfindung betrifft eine Anhängerkupplung für Kraftfahrzeuge mit den im Oberbegriff des unabhängigen Anspruchs angegebenen Merkmalen. Eine solche Anhängekupplung mit dort motorischem Antrieb zum Verschwenken der Kugelstange von einer Arbeitsstellung in eine Ruhestellung und umgekehrt ist durch die EP 1 153 770 A bekannt geworden. Das geschieht in zwei Bewegungsabschnitten mit durch die geometrische Ausbildung eines Führungsschlitzes einer kulissenartigen Führungseinrichtung gesteuerten Bewegungsabläufen. Hierzu greift ein die Kugelstange nach oben hin verlängernder Führungsabschnitt als Kullssenstift in den Führungsschlitz ein. Sobald der Kulissenstift das in Beaufschlagungsrichtung vordere Ende des Führungsschlitzes erreicht hat, kann die zuvor um eine horizontale Schwenkachse verschwenkte Kugelstange verdreht werden. Zur Endlagen-Verspannung wird kein Passstück mit Formschlußverbindung in eine Aufnahme eingedrückt, sondern es sind Anschlagelemente und -glieder vorgesehen, gegen die die Kugelstange unter Anpressdruck gehalten wird.

Bei einer durch die DE 198 599 61 A1 bekanntgewordenen Anhängerkupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits eines Kugelstangenlagerkopfes und andererseits eines diesem gegenüberliegenden Bauteiles in Form eines Anbauflansches drehfest festlegbar. Die Kugelstange wird sowohl in der Ruhelage, in welcher sich die Kugelstange in etwa quer zur Fahrzeuglängsrichtung unter dem Stoßfänger bzw. der Heckschürze befindet, als auch in der Betriebslage, in welcher sich die Kugelstange im wesentlichen in Fahrzeuglängsrichtung befindet, mittels der Formschlussverbindungen drehfest festgelegt. Die Formschlusaverbindungen, bestehend aus einer Verzahnung sowie einer Gegenverzahnung, greifen in den Drehendstellungen des Kugelstangenlagerkopfes ineinander.

Aus der EP 0 850 147 B1 ist eine Anhängekupplung mit einem motorischen Antrieb unter Zwischenschaltung eines Umlaufrädergetriebes zum Verschwenken der Kugelstange zwischen ihrer Ruhe- und ihrer Betriebsstellung bekannt. Die Kugelstange selbst ist ein Teil einer Spindel eines Spindel-Mutter-Antriebes ausgebildet und axial verstellbar. Sie besitzt eine eingeschraubte Verstellspindel, die über ein Stirnrad- sowie Planetengetriebe von einem elektrischen Motor gedreht wird. Die Kugelstange ist in einer Führungshülse angeordnet, die mit einer Zwangsführung ausgebildet ist und bewirkt, dass nach einem geführten Axial-Verstellweg die Kugelstange dann mit in ihrer Betriebsstellung nach oben zeigender Kugel gedreht wird.

Der Erfindung liegt die Aufgabe zugrunde, eine Anhängerkupplung der eingangs genannten Art zu schaffen, die ein betriebssicheres, einfaches Verschwenken, von Hand oder vorzugsweise motorisch, der Kugelstange ermöglicht, um diese mit geringstmöglichem Bewegungsraum in die Arbeitsstellung oder umgekehrt verschwenken zu können.

Diese Aufgabe wird bei einer gattungsgemäßen Anhängerkupplung erfindungsgemäß dadurch gelöst, dass sich einem linearen axialen Verstellweg zum Ein- oder Ausrücken des Passstückes ein mit der Kugelstange gemeinsames Verschwenken um die vertikale und um die horizontale Schwenkachse anschließt. Es läßt sich hiermit eine exakte, klar definierte Zwangsführung des Bewegungsablaufs der Kugelstange erreichen. Das kann weiter begünstigt werden, wenn die Schwenkachsen vorzugsweise als Scharnierlagerungen ausgebildet sind, was am Ort des Geschehen festgelegte Drehpunkte ermöglicht.

Eine Ausgestaltung der Erfindung sieht vor, dass die Schwenkachsen schräg verlaufend ausgerichtet sind. Durch einfaches Variieren des Schrägwinkels der Scharnierachsen lässt sich der Bewegungsablauf ohne weiteres an die jeweiligen Räumlichkeiten am Fahrzeugheck anpassen.

Nach einem Vorschlag der Erfindung ist eine für die beiden Schwenkachsen gemeinsame Scharnieraugen-Trägerplatte auf einer beweglich geführten Bodengleitplatte des Kupplungsgehäuses angeordnet. Die Schwenkbewegungen, und zwar einmal um die im wesentlichen vertikale Schwenkachse zum Ein- oder Ausrücken des Passstückes sowie danach das weitere Verschwenken des Lagerkopfes mit der Kugelstange und erst dann um die im wesentlichen horizontale Schwenkachse, wobei die Scharnieraugen-Trägerplatte um die im wesentlichen horizontale Schwenkachse schräg nach oben angehoben wird, lassen sich auf diese Weise zwangsweise sukzessive, gleichwohl in einem kontinuierlichen Ablauf durchführen. Die beweglich geführte Bodengleitplatte schafft mit der axialen Verlagerung den Freiraum für die Ein- oder Ausrückbewegung der Verriegelung des Lagerkopfes.

Wenn vorteilhaft an die Bodengleitplatte eine Zugfeder angreift, unterstützt das die definierten Bewegungsabläufe, da die Scharnieraugen-Trägerplatte dann auf jeden Fall eine gezielt bestimmte Endposition einnimmt.

Es wird erfindungsgemäß vorgeschlagen, dass der Lagerkopf sandwichartig aufgebaut ist und zwischen einem oberen und einem unteren Passstück ein Ankopplungsstück der Antriebseinrichtung aufweist. Während das untere Passstück von vornherein einstückig mit der Kugelstange ausgebildet sein kann, wird das obere Passstück erst aufgesetzt, nachdem das eine augenartige Montageöffnung aufweisende Ankopplungsstück aufgesteckt worden ist. Die Scharnierlagerung durch eine in Scharnieraugen der Passstücke und das von diesen eingeschlossene Scharnierauge der Trägerplatte gesteckte Schwenkachse, nämlich ein Bolzen, stellt dann den einheitlichen Verbund dieser Teile her.

Eine bevorzugte Ausführung der Erfindung sieht vor, dass die Passstückaufnahme und das Passstück mit einer Kugelverriegelung ausgebildet sind. Diese besteht aus entweder in dem Passstück oder in der Passstückaufnahme angeordneten Kugeln, die zur Verriegelung der Arbeitsstellung der Kugelstange in Kugelkalotten des jeweiligen komplementären Bauteiles eingreifen und damit die Kugelstange drehfest festlegen. Eine solche Kugelverriegelung lässt sich sehr viel leichter lösen als beispw. ein Keil oder Verzahnungseingriff in der Drehendstellung des Lagerkopfes bzw. der Kugelstange.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Figuren 1,2: in perspektivischer Draufsicht (Figur 1) bzw. Vorderansicht (Figur 2) eine Anhängerkupplung mit ihrer in der Arbeitsstellung drehfest verriegelten Kugelstange;
- Figuren 3,4: Ansichten der Anhängerkupplung wie zuvor mit demgegenüber zum Schwenken ausgerückter bzw. entriegelter Kugelstange;
- Figuren 5,6: Ansichten der Anhängerkupplung wie zuvor in einer FolgeSchwenkposition der Kugelstange;
- Figuren 7,8: Ansichten der Anhängerkupplung wie zuvor mit in ihre Endlage quer zur Fahrzeuglängsrichtung verschwenkter Kugelstange; und
- Figuren 9,10: Ansichten der Anhängerkupplung wie zuvor mit aus der Endstellung nach den Figuren 7 und 8 in eine hochstehende, unsichtbare Position ihrer Kupplungskugel in die Ruhestellung verschwenkter Kugelstange.

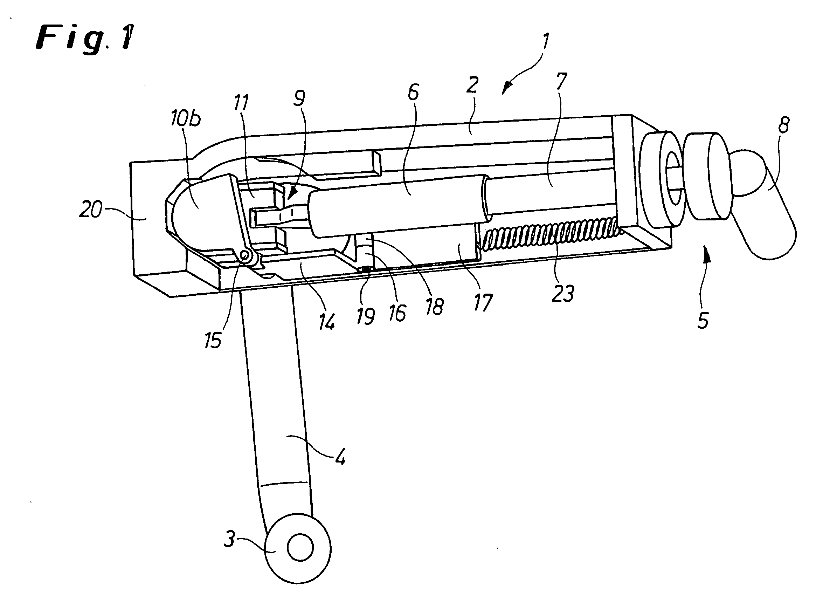

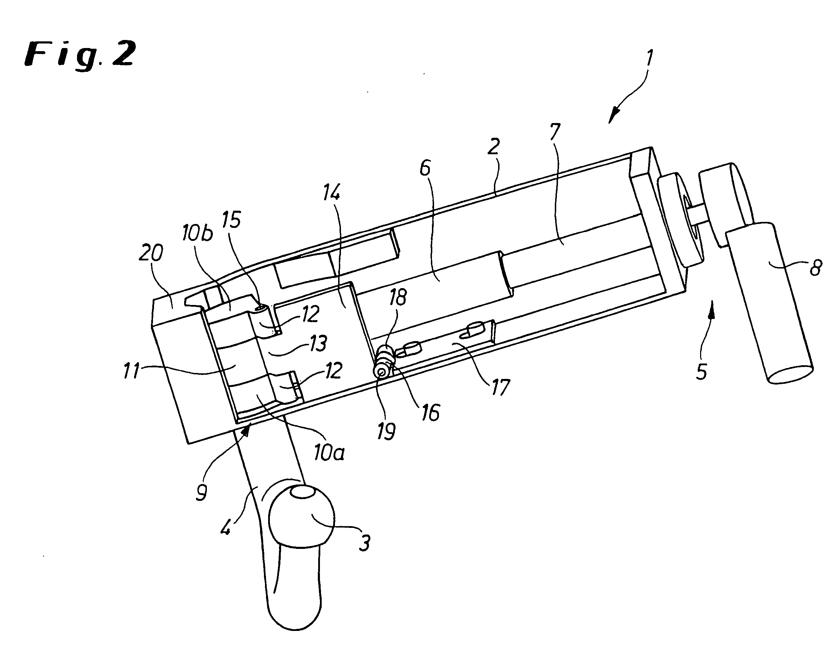

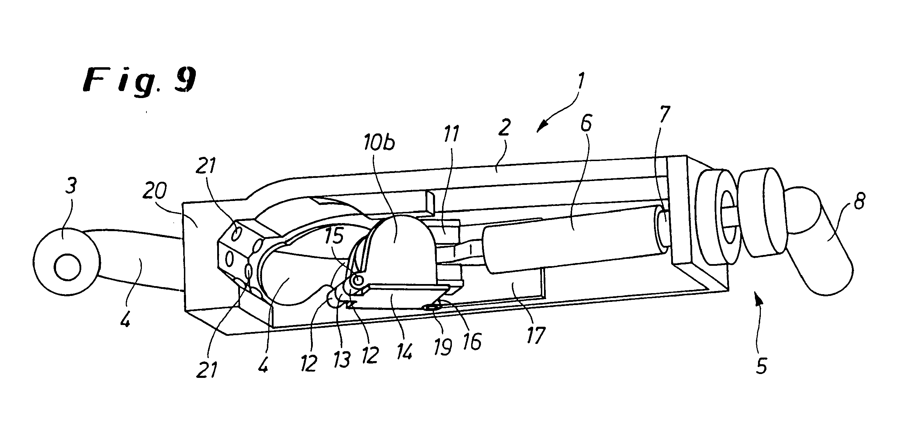

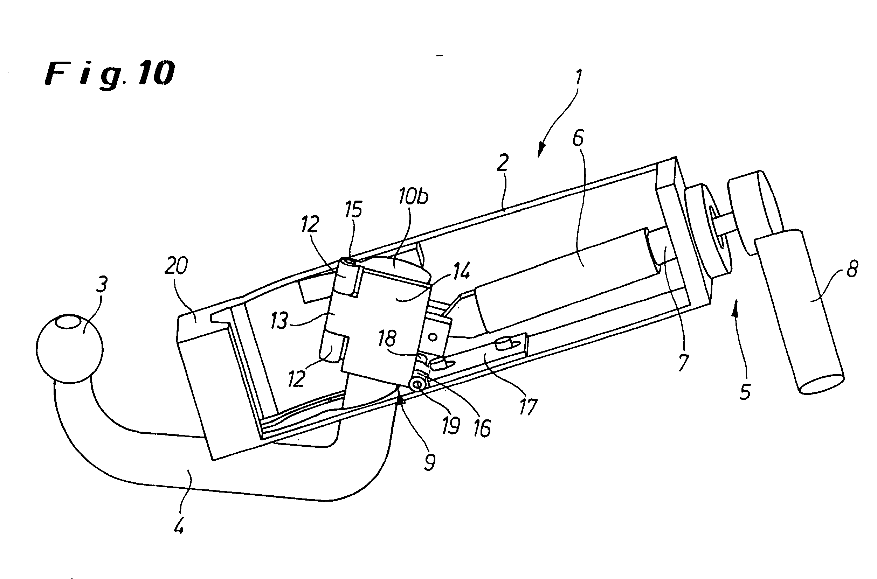

Eine in den Figuren 1 bis 10 dargestellte Anhängerkupplung 1 für Kraftfahrzeuge besitzt ein Kupplungsgehäuse 2 mit einer darin verschwenkbar gelagerten, gekröpften, an ihrem freien Ende eine Kupplungskugel 3 tragende Kugelstange 4. Zum Verschwenken der Kugelstange 4 aus ihrer verriegelten Arbeitsstellung (Figuren 1,2) in ihre Ruhestellung (Figuren 9,10) ist im Ausführungsbeispiel eine Antriebseinrichtung 5 mit einem linearen Stellantrieb vorgesehen, der eine Gewindehülse 6 und eine mit dieser im Eingriff stehende Gewindespindel 7 aufweist, die von einem elektrischen Antriebsmotor 8 angetrieben wird.

Die Kugelstange 4 ist mit einem Lagerkopf 9, der hier gleichzeitig mit einem als Passstück 10a ausgebildet ist (vgl. Figur 2), in dem Kupplungsgehäuse 2 angeordnet. Auf einem stehbolzenartigen Lagerkopfende sind ein Ankopplungsstück 11, über das die Gewindehülse 6 der Antriebseinrichtung 5 mit dem Lagerkopf 9 bzw. der Kugelstange 4 verbunden ist, und ein oberes Passstück 10b aufgesteckt. Die Passstücke 10a, 10b sind mit Scharnieraugen 12 versehen, die mit einem Scharnierauge 13 einer Trägerplatte 14 durch einen eingesteckten Bolzen eine vertikale Schwenkachse 15 bilden. An der von dem Scharnierauge 13 abgewandten Seite ist an der Trägerplatte 14 unten ein weiteres Scharnierauge 16 angebracht, das mit auf einer beweglich geführten Bodengleitplatte 17 des Kupplungsgehäuses 2 angeordneten Scharnieraugen 18 und einem durch die Scharnieraugen 16,17 gesteckten Bolzen ein zweite, hier horizontale Schwenkachse 19 für den Lagerkopf 9 bzw. die Kugelstange 4 bildet.

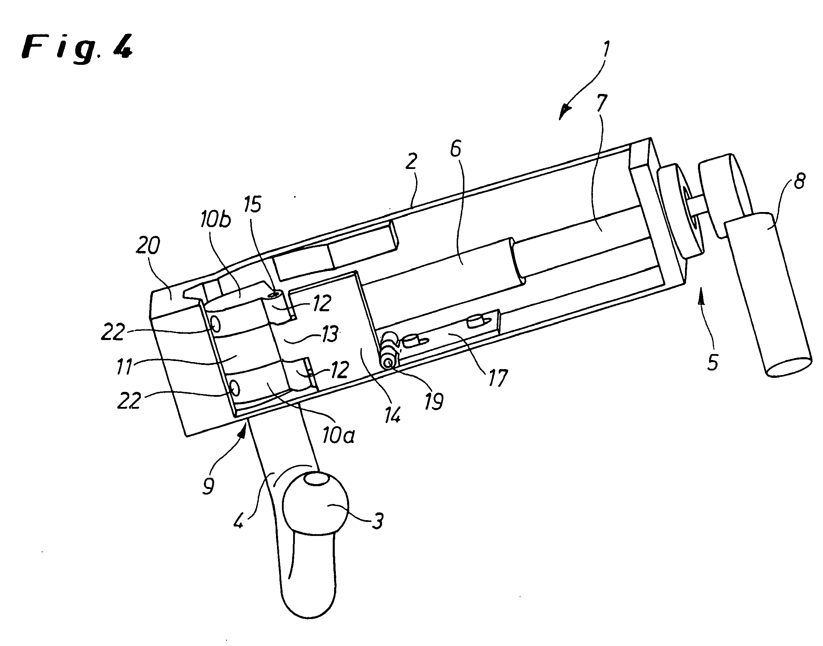

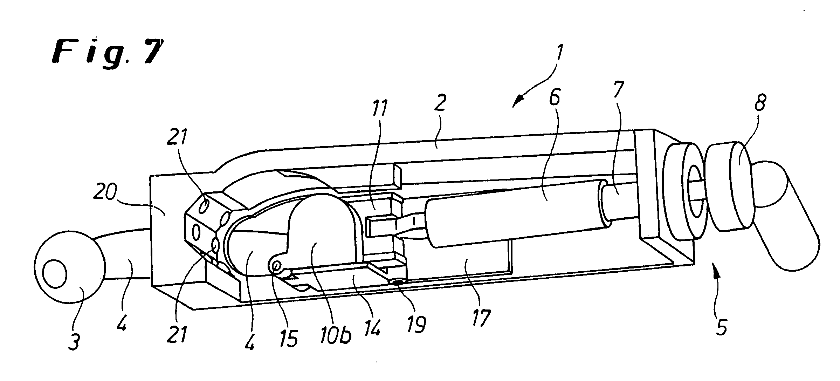

Die dem Lagerkopf 9 benachbarte Endwand des Kupplungsgehäuses 2 ist als Passstückaufnahme 20 für die Passstücke 10a, 10b ausgebildet, wobei eine Kugelverriegelung, bestehend aus in der Passstückaufnahme 20 angeordneten Kugeln 21 (vgl. Figur 7) und diesen in den Passstücken 10a, 10b zugeordneten Kugelkalotten 22 (vgl. Figur 4) besteht, die in der in den Figuren 1 und 2 gezeigten Arbeitsstellung der Kugelstange 4 durch den formschlüssigen Eingriff diese Drehendlage der Kugelstange 4 sichert.

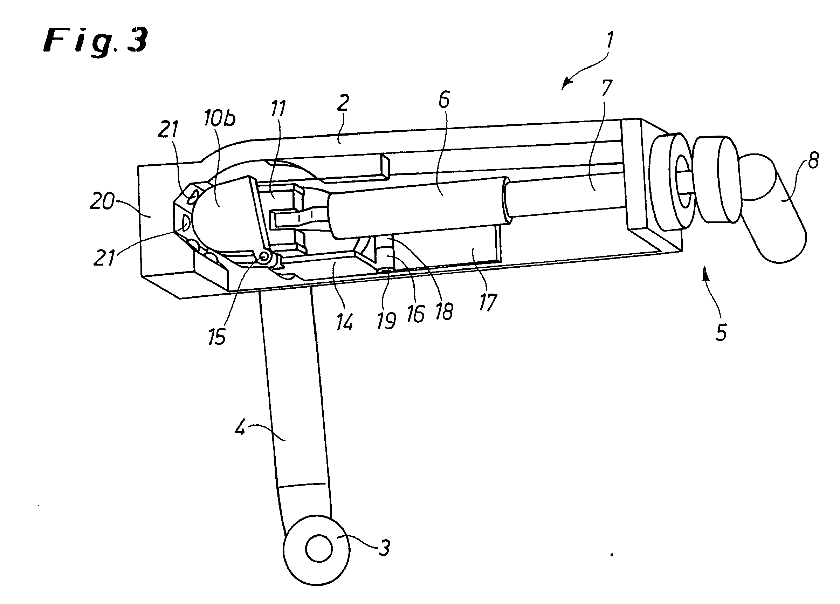

Zum Verschwenken der Kugelstange 4 in ihre Ruhestellung wird die Antriebseinrichtung 5 betätigt und zunächst die Verriegelung der Kugeln 21 in den Kugelkalotten 22 gelöst (vgl. die Figuren 3 und 4). Die Bodengleitplatte 17 legt hierzu einen linearen Verstellweg zurück, und ebenso der Lagerkopf 9 mit den Passstücken 10a, 10b, aufgrund der Verbindung der Scharnieraugen-Trägerplatte 14 über die Scharnierlagerungen 12,13 bzw. 16,18 mit einerseits dem Lagerkopf 9 und andererseits der Bodengleitplatte 17.

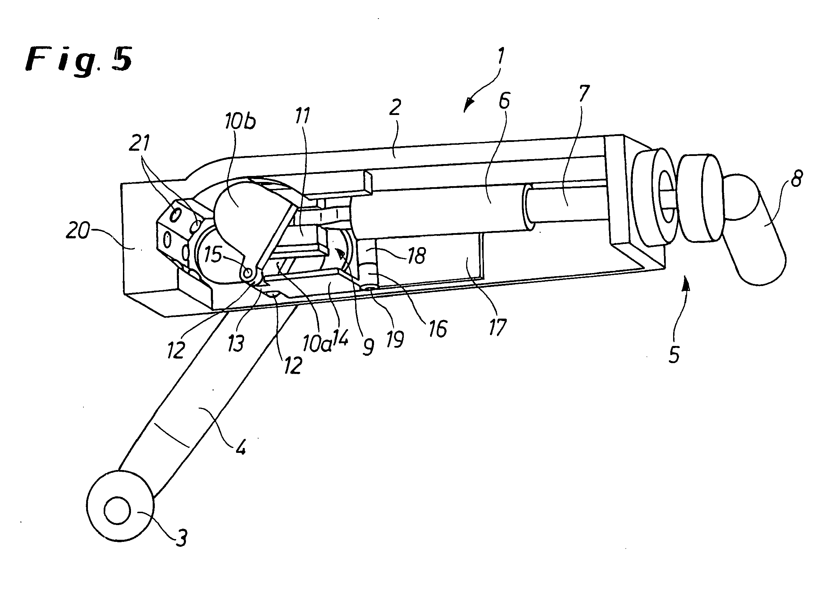

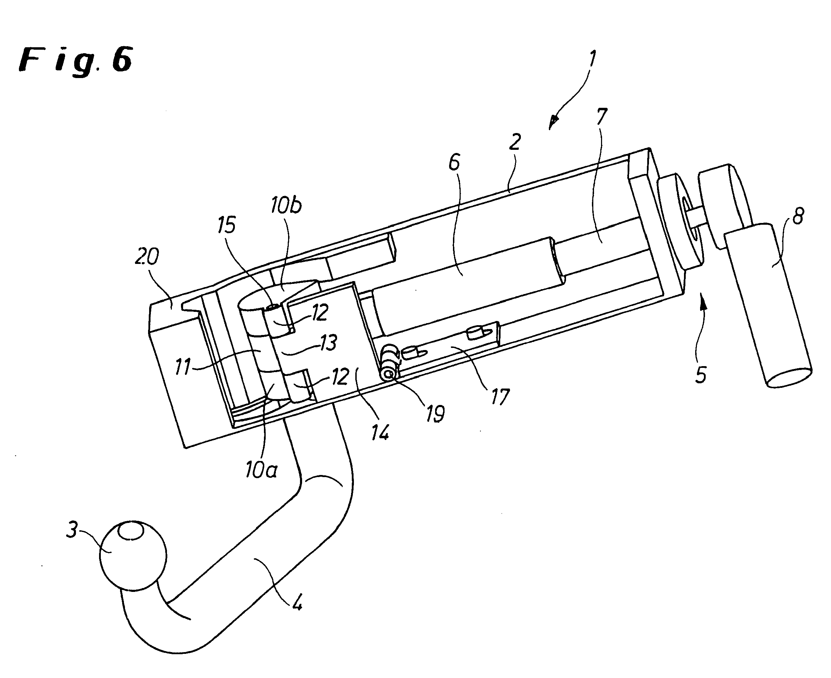

Zur Unterstützung einer definierten Endlage der linear verstellten Bodengleitplatte 17 greift an diese eine in Figur 1 schematisch eingezeichnete Zugfeder 23 an. Mit Erreichen dieser Position schließt sich im Bewegungsablauf gemäß den Figuren 5 und 6 das seitliche Verschwenken der Kugelstange 4 an, wobei der Lagerkopf 9 mit seinen Passstücken 10a, 10b um die Schwenkachse 15 der Scharnierlagerung 12,13 verschwenkt; die Antriebseinrichtung 5 bzw. deren Gewindehülse 6 und Gewindespindel 7 verlagern sich hierbei zusammen mit dem Ankopplungsstück 11 und folglich der Kugelstange 4 etwas aus ihrer mittigen Lage heraus nach hinten (vgl. Figur 5).

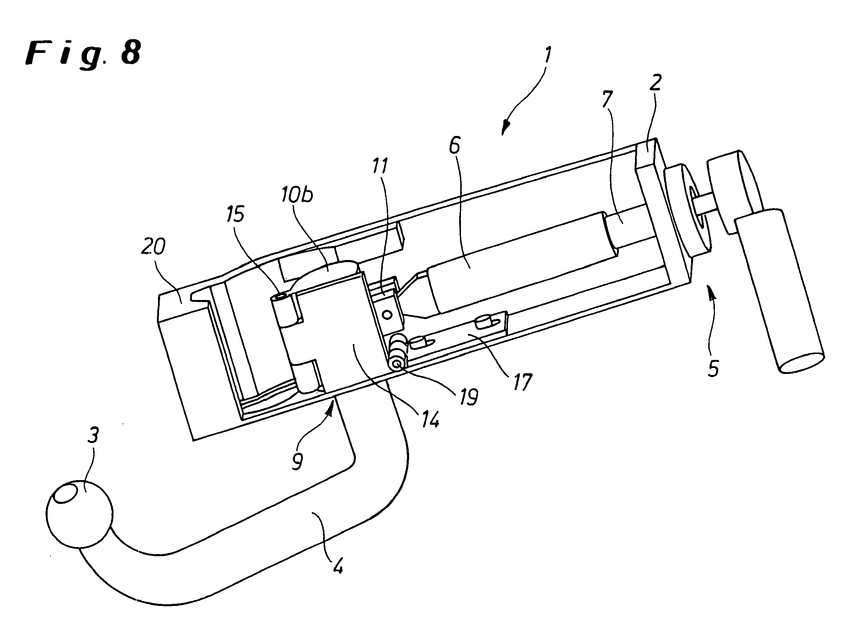

In Folge der weiteren linearen Verstellung durch die Antriebseinrichtung 5 wird der Lagerkopf 9 mit der Kugelstange 4 zunehmend um die Schwenkachse 15 in die zur Fahrzeuglängsrichtung seitliche Endposition verschwenkt, bis sich die Passstücke 10a, 10b an die Trägerplatte 14 anlegen, wie den Figuren 7 und 8 zu entnehmen ist. Mit dem Erreichen dieser Position bewirkt die Antriebseinrichtung 5 ein Verschwenken der Scharnieraugen-Trägerplatte 14 und damit des Lagerkopfes 9 einschließlich Kugelstange 4 um die Schwenkachse 19 der Scharnierlagerung 16,18 der Bodengleitplatte 17, wodurch die seitlich verschwenkte Kugelstange 4 in ihre in den Figuren 9 und 10 gezeigte angehobene Endlage bzw. Ruhestellung gelangt.

Der Bewegungsablauf zum Verschwenken der Kugelstange 4 aus dieser Ruhestellung zurück in die Arbeitsstellung nach den Figuren 1 und 2 geschieht in umgekehrter Folge, wobei die begrenzt beweglich geführte Bodengleitplatte 17 erst dann wieder verstellt wird, wenn die Kugelverriegelung eingerückt wird.

## Patentansprüche

1. Anhängerkupplung für Kraftfahrzeuge, umfassend eine fahrzeugfest angeordnete Kugelstange (4), die mit einem Lagerkopf (9) in einem Kupplungsgehäuse (2) geführt gelagert ist, an ihrem freien Ende eine Kupplungskugel (3) trägt und mittels einer Antriebseinrichtung (5), insbesondere ein elektrischer Antriebsmotor, von einer Arbeitsstellung in eine Ruhestellung und umgekehrt verschwenkbar ist, wobei die Antriebseinrichtung (5) an den Lagerkopf (9) angreift und ein Passstück (10a,10b) des Lagerkopfes (9) in der Arbeitsstellung in eine Passstückaufnahme (20) des Kupplungsgehäuses (2) unverdrehbar festspannt oder zum Verschwenken in die Ruhestellung aus der Passstuckaufnahme (20) herauszieht, und der Lagerkopf (9) und das Passstück (10a,10b) mit sowohl einer im wesentlichen vertikalen Schwenkachse (15) als auch einer im wesentlichen horizontalen Schwenkachse (19) in dem Kupplungsgehäuse (2) gelagert sind,
**dadurch gekennzeichnet,**
**daß** sich einem linearen, axialen Verstellweg zum Ein- oder Ausrücken des Passstückes (10 a, 10 b) ein mit der Kugelstange gemeinsames Verwenken um die vertikale Schwenkachse (15) und um die horizontale Schwenkachse (19) anschließt.

2. Anhängerkupplung nach Anspruch 1,
**dadurch gekennzeichnet,**
**dass** die Schwenkachsen (15,19) als Scharnierlagerungen (12,13; 16,18) ausgebildet sind.

3. Anhängerkupplung nach Anspruch 1 oder 2
**dadurch gekennzeichnet,**
**dass** die Schwenkachsen (15,19) schräg verlaufend ausgerichtet sind.

4. Anhängerkupplung nach einem der Ansprüche 1 bis 3,
**dadurch gekennzeichnet,**
**dass** eine für die beiden Schwenkachsen (15,19) gemeinsame Scharnieraugen-Trägerplatte (14) auf einer beweglich geführten Bodengleitplatte (17) des Kupplungsgehäuses (2) angeordnet ist.

5. Anhängerkupplung nach Anspruch 4,
**dadurch gekennzeichnet,**
**dass** an die Bodengleitplatte (17) eine Zugfeder (23) angreift.

6. Anhängerkupplung nach einem der Ansprüche 1 bis 5,
**dadurch gekennzeichnet,**
**dass** der Lagerkopf (9) sandwichartig aufgebaut ist und zwischen einem unteren und einem oberen Passstück (10a,10b) ein Ankopplungsstück (11) der Antriebseinrichtung (5) aufweist.

7. Anhängerkupplung nach einem der Ansprüche 1 bis 6
**dadurch gekennzeichnet,**
**dass** die Passstückaufnahme (20) und das Passstück (10a,10b) mit einer Kugelverriegelung (21,22) ausgebildet sind.

## Claims

1. Trailer hitch for motor vehicles, comprising a ball bar (4) which is arranged such that it is fixed to the vehicle and which is mounted with a bearing head (9) in a guided manner in a hitch housing (2), bears a hitch ball (3) on its free end and can be pivoted from a working position to a rest position and vice versa by means of a drive device (5), in particular an electric drive motor, wherein the drive device (5) acts on the bearing head (9) and clamps a fitting piece (10a, 10b) of the bearing head (9) into a fitting piece socket (20) of the hitch housing (2) in a non-rotatable manner when in the working position or pulls it out of the fitting piece socket (20) in order to pivot into the rest position, and the bearing head (9) and the fitting piece (10a, 10b) are mounted in the hitch housing (2) with both an essentially vertical pivot axis (15) and an essentially horizontal pivot axis (19),
**characterised in that**
a linear, axial movement path for moving the fitting piece (10a, 10b) in or out is followed by a pivoting together with the ball bar about the vertical pivot axis (15) and about the horizontal pivot axis (19).

2. Trailer hitch according to Claim 1,
**characterised in that**
the pivot axes (15, 19) are configured as hinge bearings (12, 13; 16, 18).

3. Trailer hitch according to Claim 1 or 2,
**characterised in that**
the pivot axes (15, 19) are aligned in an obliquely running manner.

4. Trailer hitch according to one of Claims 1 to 3,
**characterised in that**
a gudgeon support plate (14) which is common for both pivot axes (15, 19) is arranged on a movably guided base sliding plate (17) of the hitch housing (2).

5. Trailer hitch according to Claim 4,
**characterised in that**
a tensile spring (23) acts on the base sliding plate (17).

6. Trailer hitch according to one of Claims 1 to 5,
**characterised in that**
the bearing head (9) has a sandwich-like structure and has a coupling piece (11) of the drive device (5) between a lower and an upper fitting piece (10a, 10b).

7. Trailer hitch according to one of Claims 1 to 6,
**characterised in that**
the fitting piece socket (20) and the fitting piece (10a, 10b) are configured with a ball lock (21, 22).

## Revendications

1. Accouplement de remorque pour véhicules, contenant une barre d'accouplement (4) disposée de façon solidaire du véhicule, laquelle est fixée de façon guidée avec une tête de support (9) dans un boîtier d'accouplement (2), porte une boule d'accouplement (3) sur son extrémité libre et peut basculer au moyen d'un dispositif d'entraînement (5), en particulier un moteur d'entraînement électrique, d'une position de travail dans une position de repos et inversement, le dispositif d'entraînement (5) s'appliquant sur la tête de support (9) et bloquant une pièce ajustée (10a, 10b) de la tête de support (9) dans la position de travail dans un logement de pièce ajustée (20) du boîtier d'accouplement (2) de façon non rotative et sortant du logement de pièce ajustée (20) pour le basculement dans la position de repos, et la tête de support (9) et la pièce ajustée (10a, 10b) étant logées avec aussi bien un axe de pivotement (15) sensiblement vertical qu'un axe de pivotement (19) sensiblement horizontal dans le boîtier d'accouplement (2),
**caractérisé en ce que**
un basculement commun avec la barre d'accouplement autour de l'axe de pivotement (15) vertical et autour de l'axe de pivotement (19) horizontal fait suite à une course de déplacement linéaire et axial pour l'encliquetage ou le désencliquetage de la pièce ajustée (10a, 10b).

2. Accouplement de remorque selon la revendication 1,
**caractérisé en ce que**
les axes de pivotement (15, 19) sont conçus sous forme de fixations à charnière (12, 13 ; 16, 18).

3. Accouplement de remorque selon la revendication 1 ou 2,
**caractérisé en ce que**
les axes de pivotement (15, 19) sont orientés et agencés en biais.

4. Accouplement de remorque selon l'une quelconque des revendications 1 à 3,
**caractérisé en ce que**
une plaque de support à oeil de charnière (14) commune pour les deux axes de pivotement (15, 19) est disposée sur une plaque glissante de sol (17) guidée de façon mobile du boîtier d'accouplement (2).

5. Accouplement de remorque selon la revendication 4,
**caractérisé en ce que**
un ressort de traction (23) s'applique sur la plaque glissante de sol (17).

6. Accouplement de remorque selon l'une quelconque des revendications 1 à 5,
**caractérisé en ce que**
la tête de support (9) est conçue à la façon d'un sandwich et présente une pièce de rattachement (11) du système d'entraînement (5) entre une pièce ajustée inférieure et une pièce ajustée supérieure (10a, 10b).

7. Accouplement de remorque selon l'une quelconque des revendications 1 à 6,
**caractérisé en ce que**
le logement de pièce ajustée (20) et la pièce ajustée (10a, 10b) sont conçus avec un verrouillage à boule (21, 22).
